(19) Europäisches Patentamt
European Patent Office
Office européen des brevets

(11) **EP 2 972 072 B1**

(12) **FASCICULE DE BREVET EUROPEEN**

(45) Date de publication et mention de la délivrance du brevet:
**17.05.2023 Bulletin 2023/20**

(21) Numéro de dépôt: **14720176.8**

(22) Date de dépôt: **13.03.2014**

(51) Classification Internationale des Brevets (IPC):
*G01B 21/32* (2006.01)  *G01B 11/16* (2006.01)
*G01L 1/24* (2006.01)  *G01M 5/00* (2006.01)
*G01M 11/08* (2006.01)  *G01L 5/16* (2020.01)

(52) Classification Coopérative des Brevets (CPC):
**G01B 11/18; G01B 21/32; G01L 1/242;
G01L 1/246; G01L 5/16; G01M 5/0041;
G01M 5/0091; G01M 11/086**

(86) Numéro de dépôt international:
**PCT/FR2014/050585**

(87) Numéro de publication internationale:
**WO 2014/140496 (18.09.2014 Gazette 2014/38)**

(54) **DISPOSITIF DE MESURE DE CONTRAINTES**

SPANNUNGSMESSVORRICHTUNG

STRAIN MEASURING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.03.2013 FR 1352216**

(43) Date de publication de la demande:
**20.01.2016 Bulletin 2016/03**

(73) Titulaire: **Nantes Université
44000 Nantes (FR)**

(72) Inventeurs:
• **FRANCOIS, Marc
44000 Nantes (FR)**
• **LECIEUX, Yann
44100 Nantes (FR)**
• **LEDUC, Dominique
44000 Nantes (FR)**
• **LUPI, Cyril
44300 Nantes (FR)**

(74) Mandataire: **Plasseraud IP
66, rue de la Chaussée d'Antin
75440 Paris Cedex 09 (FR)**

(56) Documents cités:
**WO-A1-2010/034321      FR-A1- 2 850 745
US-A- 5 629 757          US-B1- 6 696 974**

EP 2 972 072 B1

## Description

L'invention concerne un dispositif de mesure des contraintes ou des déformations locales à l'intérieur d'un volume, qui peut par exemple représenter une structure ou une partie de structure.

Les structures qui sont utilisées très couramment en architecture, dans les ouvrages de génie civil ainsi que généralement dans les domaines liés à la mécanique doivent généralement subir des contraintes mécaniques qui peuvent évoluer au cours du temps. L'exercice de ces contraintes provoque des déformations dans le volume de ces structures ce qui peut aboutir à altérer leurs caractéristiques mécaniques. Pour assurer un suivi des qualités de ces structures il est nécessaire de pouvoir mesurer l'évolution des déformations qui se produisent dans le volume de ces structures.

L'évolution des déformations des structures et l'estimation des contraintes qui s'exercent sur celles-ci peuvent être suivies par des dispositifs placés sur la surface externe des structures tels que des témoins visuels pour les déformations ou des capteurs mécaniques sensibles à la déformation à la surface de ces structures (FR2855210). La mesure de la déformation à l'intérieur même du volume peut être estimée en intégrant un capteur uniaxial ou « fibre de mesure » tel qu'une corde optique dans le volume même de la structure (WO2006127034). Ces méthodes cependant ne permettent au mieux de n'estimer qu'une moyenne selon l'axe du capteur des composantes des contraintes ou des déformations s'exerçant dans une fibre placée dans le volume surveillé. Il est également connu du document US6696974 un procédé de réflectométrie dans lequel un câble optique est assemblé à des supports et attaché à un tube enfoui dans un sol rempli de béton. Des irrégularités locales contrôlées sont mesurées par la fibre optique. Il est également connu du document WO2010/034321 un rouleau industriel comprenant des capteurs optiques à réseaux de Bragg pris dans un matériau déformable élastiquement et ayant pour but d'agir comme amplificateur de mouvement. Il est également connu du document US5629757 l'utilisation de plusieurs systèmes pour mesurer des changements dans la cropute terrestre en mesurant le changement de diamètre d'un corps cylindrique enfoui sous terre. Enfin, l'intégration directement dans le volume surveillé d'un capteur peut aboutir à des affaiblissements de la structure qui peuvent être dus à la différence de qualité mécanique des matériaux composant le capteur, ou bien à modifier la distribution des contraintes dans le volume de la structure à proximité du capteur. Dans ce dernier cas la forme particulière du capteur peut aboutir à des concentrations locales des contraintes propices à l'amorçage de fissure au voisinage de ce capteur. Par ailleurs la modification de la distribution des contraintes au voisinage même du capteur est nuisible à la qualité de la mesure, qui risque de ne pas refléter idéalement les grandeurs que l'on souhaite mesurer [ce qui peut aboutir à utiliser ces capteurs comme alertes de seuils plutôt que comme systèmes pour effectuer des mesures suivies].

La présente invention vise à améliorer la qualité et la fiabilité de la mesure des contraintes et des déformations s'exerçant localement à l'intérieur d'un volume.

A cet effet on prévoit un dispositif de mesure des contraintes et/ou des déformations locales à l'intérieur d'un volume de mesure d'une structure de matériaux présentant des propriétés mécaniques connues, le dispositif comprenant les caractéristiques décrites dans la revendication indépendante 1.

Le corps d'épreuve de forme ellipsoïdale peut être plein.

En ce qui concerne les propriétés mécaniques du matériau de la structure elle-même, il peut s'agir de propriétés mécaniques théoriques en supposant le matériau sain.

On fait ici référence alternativement aux contraintes ou aux déformations, étant entendu que les deux grandeurs sont reliées par la loi de Hooke de chaque matériau.

En ce qui concerne les contraintes et les déformations locales déterminées, il s'agit bien des grandeurs qui seraient présentes dans la structure au niveau du volume de mesure, en l'absence du dispositif de mesure (i.e. si on n'avait pas remplacé le matériau constitutif de la structure à cet endroit par le corps d'épreuve), et par conséquent de ces mêmes grandeurs au voisinage du corps d'épreuve.

Dans des modes de réalisation préférés de l'invention, on peut éventuellement avoir recours en outre à l'une et/ou à l'autre des dispositions suivantes :

- les fibres de mesure sont des fibres optiques de mesure. Les moyens de liaison sont adaptés pour lier la fibre de mesure à un système adapté pour stimuler l'au moins une fibre optique de mesure.
- les moyens de liaison sont des dispositifs comprenant des fibres optiques en communication optique avec l'au moins une fibre de mesure.

Selon une autre caractéristique, les moyens de liaison sont adaptés pour transmettre en direction de l'au moins une fibre de mesure, un signal de stimulation, et transmettre depuis l'au moins une fibre de mesure un signal provenant d'une interaction entre la fibre de mesure et le signal de stimulation.

Dans un mode de réalisation particulier, k est égal à 3.

Selon une autre caractéristique, le dispositif de mesure peut compter plusieurs fibres de mesure parallèles dans un même corps d'épreuve.

Selon d'autres caractéristiques, le dispositif de mesure peut comporter trois fibres de mesure de déformation ou bien six fibres de mesure de déformations.

Selon une autre caractéristique, le dispositif de mesure comporte six fibres de mesure de déformations et les axes des fibres de mesure sont placés sensiblement perpendiculairement aux faces d'un dodécaèdre régulier.

Selon une autre caractéristique, les fibres de mesure sont des tronçons d'une même fibre optique, et le système est adapté pour démoduler une information portée par les signaux provenant des fibres de mesure.

Selon une autre caractéristique, le dispositif de mesure comprend en outre $k_o$ fibres de mesure de déformation, agencées de manière non indépendantes dans les fibres, où $k_o$ est compris entre 1 et k.

Selon une autre caractéristique, chaque fibre de mesure est attachée en ses extrémités au corps d'épreuve.

Selon une autre caractéristique, le dispositif de mesure comprend un système d'acquisition agencé en aval des moyens de liaison, et adapté pour acquérir et enregistrer lesdits signaux.

Selon une autre caractéristique, le dispositif de mesure comprend en outre un calculateur relié à l'au moins une fibre de mesure, adapté pour déterminer des composantes spatiales du champ de contraintes et/ou déformations locales à partir des signaux.

Selon une autre caractéristique, le corps d'épreuve du dispositif est constitué d'un matériau isotrope.

Selon une autre caractéristique, les propriétés mécaniques du matériau du corps d'épreuve du dispositif de mesure sont identiques à celles du matériau sain constitutif de la structure.

Selon une autre caractéristique, les moyens de liaison associés au dispositif de mesure sont rassemblés en un seul câble de liaison.

Selon une autre caractéristique, le dispositif de mesure comprend une pluralité de corps d'épreuve reliés entre eux.

Selon une autre caractéristique, les moyens de liaison sont disposés en forme de filet, comportant des noeuds aux croisements des moyens de liaison, un dispositif de mesure étant fixé en certains noeuds ou chaque noeud.

Selon une autre caractéristique, la fibre de mesure est un composant séparé du corps d'épreuve.

Selon une autre caractéristique, la fibre optique de mesure comprend un guide d'onde inscrit dans le corps d'épreuve.

L'invention porte également sur une structure mécanique comprenant un volume de mesure et un dispositif de mesure tel que décrit précédemment.

Certains cas de réalisation présentent en outre les avantages décrits ci après.

Le dispositif de l'invention permet d'améliorer la fiabilité de la mesure en regroupant les moyens de mesure à l'intérieur d'un sous volume destiné à être intégré à l'intérieur du volume dont on souhaite suivre l'évolution ; et réalisé dans un matériau garantissant une bonne transmission des grandeurs mesurées vers le détecteur.

L'amélioration de la qualité de la mesure est liée à la connaissance locale précise des déformations dans un volume de mesure et donc nécessite la connaissance du tenseur des déformations en tout point de ce volume. Les composantes de ce tenseur de déformation peuvent être représentées par une matrice 3x3.

$$\begin{pmatrix} \varepsilon_{11} & \varepsilon_{12} & \varepsilon_{13} \\ \varepsilon_{21} & \varepsilon_{22} & \varepsilon_{23} \\ \varepsilon_{31} & \varepsilon_{32} & \varepsilon_{33} \end{pmatrix}$$

La symétrie de ce tenseur implique qu'il peut être entièrement déterminé à partir de 6 composantes indépendantes. Enfin, lorsque les constantes d'élasticité dans le volume de mesure sont connues, la connaissance du tenseur des déformations permet de calculer les composantes du tenseur des contraintes. En pratique, il est difficile de mesurer les déformations en tout point d'un volume de mesure. Il est possible de mesurer ces déformations en plusieurs points et pour des directions données en disséminant de multiples capteurs uniaxiaux dans le volume de mesure. Selon un mode de réalisation, le dispositif de l'invention permet, en intégrant plusieurs capteurs de déformation dans un corps d'épreuve adapté, de mesurer des valeurs reliées aux composantes du tenseur des déformations dans le volume du capteur, considéré comme petit devant celui de la structure. Les travaux de J.D. Eshelby [The détermination of the elastic field of an ellipsoïdal inclusion and related problems , J. D. Eshelby, Proceedings of the Royal Society of London, Vol. 241, (1957), pp. 376-396] et [The Elastic Field Outside an Ellipsoidal Inclusion , J. D. Eshelby, Proceedings of the Royal Society of London, Series A, Mathematical and Physical Sciences, Vol. 252, No. 1271 (Oct. 27, 1959), pp. 561-569] et [J.D. Eshelby, in Progress in Solid Mechanics Volume II , North Holland Publishing Compagny, Amsterdam, (1961)] et [M. Bornert, T. Bretheau, P. Gillormini, Homogénéisation en mécanique des matériaux, Hermes Science, coll. Mécanique et Ingénierie des Matériaux, 2001] permettent d'affirmer que le champ de contraintes et celui des déformations sont uniformes à l'intérieur d'une inclusion ellipsoïdale homogène plongée dans un milieu homogène d'extension infinie.

Le cas échéant, les propriétés d'anisotropie des matériaux sont prises en compte pour estimer ces composantes.

Les exemples du présent dispositif tirent avantage de ce résultat en proposant d'inclure dans un volume de mesure aux propriétés mécaniques préalablement connues, un corps d'épreuve de forme ellipsoïdale de manière à ce que les valeurs du champ de déformation y soient sensiblement uniformes et reflètent les valeurs de ces champs dans le volume de mesure. Le corps d'épreuve de forme ellipsoïdale est plein.

Le corps d'épreuve est intégrable dans la structure par tout moyen approprié. Par exemple, le corps d'épreuve peut avoir une surface munie de rugosités ou de poils ou d'excroissances pour l'accrochage. On continue de considérer le corps d'épreuve comme un ellipsoïde si sa forme enveloppe est ellipsoïdale ou si les rugosités de surface sont de dimensions négligeables par rapport au corps d'épreuve.

Dans le cas pratique le volume de mesure est suffisamment grand relativement au corps d'épreuve pour que la variation des valeurs des contraintes dans le corps d'épreuve soit faible relativement à la précision souhaitée de la mesure.

Le dispositif de l'invention intégrant une pluralité de capteurs de déformation à ce corps d'épreuve permet alors d'y mesurer simultanément plusieurs valeurs liées au tenseur de déformation. Une estimation simultanée des 6 composantes indépendantes du tenseur des déformations, et donc du tenseur des contraintes, devient possible en plaçant dans le corps d'épreuve un minimum de 6 éléments de mesure orientés selon six directions indépendantes de l'espace. Pour minimiser l'erreur dans le calcul il est alors préférable d'orienter ces 6 capteurs dans des directions distribuées le plus régulièrement dans l'espace telles que des directions perpendiculaires aux faces d'un dodécaèdre régulier.

Parallèlement à l'avantage d'utiliser un corps d'épreuve de forme ellipsoïdale, de manière à ce que les valeurs du champ de déformation y soient sensiblement uniformes et reflètent la valeur des contraintes dans le voisinage du corps d'épreuve, l'emploi du dispositif de l'invention permet en conséquence directe d'éviter de provoquer des singularités dans le champ des contraintes lors de son inclusion dans un volume de mesure. On évite ainsi de générer des concentrations locales des contraintes propices à l'amorçage de fissure au voisinage du corps d'épreuve.

D'autres caractéristiques et avantages de l'invention apparaîtront au cours de la description suivante des formes de réalisation, données à titre d'exemple non limitatif, en regard des dessins joints.

Sur les dessins :

- la figure 1 est une vue d'un corps d'épreuve placé dans un volume de mesure qui représente une partie de structure.
- la figure 2 représente un exemple avec une fibre optique de mesure placée dans un corps d'épreuve ellipsoïdal relié à l'extérieur de la structure avec des moyens de liaisons permettant d'une part la stimulation de la fibre optique de mesure et d'autre part la transmission des signaux provenant des fibres de mesure à un dispositif électronique apte à effectuer des calculs,
- la figure 3 est une vue d'un exemple avec deux fibres optiques de mesure reliées entre elles, placées dans un corps d'épreuve ellipsoïdal et relié par des moyens de liaison regroupés en un faisceau permettant la stimulation des fibres optiques de mesure et la transmission des signaux provenant des fibres de mesure à un dispositif électronique apte à effectuer des calculs.

- la figure 4 est une vue représentant un corps d'épreuve, placé dans un volume de mesure, et doté de trois fibres optiques de mesure placées orthogonalement les unes aux autres, permettant d'estimer la pression dans la structure au lieu de la mesure.
- la figure 5 est une vue d'un corps d'épreuve placé dans un volume de mesure doté de 6 capteurs orientés selon des directions distribuées dans l'espace perpendiculairement aux faces d'un dodécaèdre régulier ce qui permet d'estimer les valeurs des 6 composantes indépendantes du tenseur de contrainte au lieu de la mesure.
- la figure 6 est une vue représentant une multiplicité de corps d'épreuve distribués dans un volume de mesure représentant une partie de structure
- La figure 7 représente une multiplicité de capteurs constitués de corps d'épreuves contenant une ou plusieurs fibres optique de mesure reliés entre eux par des moyens de liaisons formant un réseau permettant d'accéder à des mesures en des lieux régulièrement espacés dans une partie étendue d'un volume de mesure constituant une partie de structure
- La figure 8 présente un exemple simplifié d'un corps d'épreuve
- La figure 9 est un schéma illustrant le champ de déformations à l'intérieur de la structure,

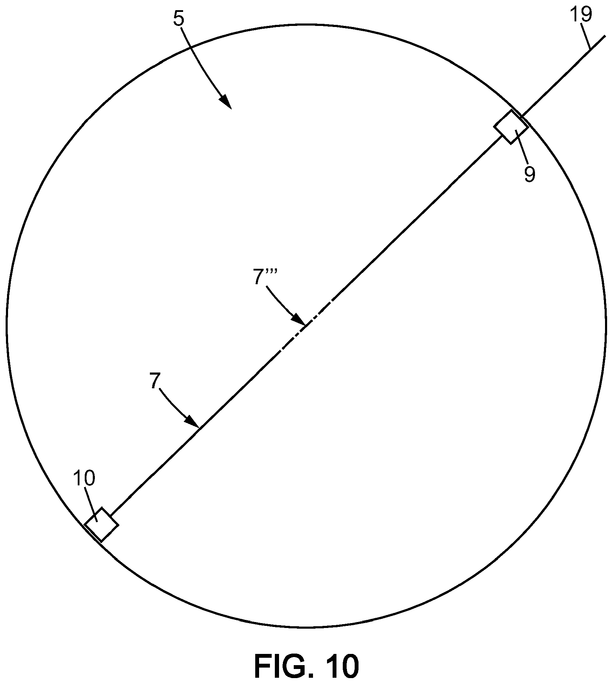

- La figure 10 est un schéma similaire à la figure 8 pour un autre mode de réalisation.

Sur les différentes figures, les mêmes références désignent des éléments identiques ou similaires.

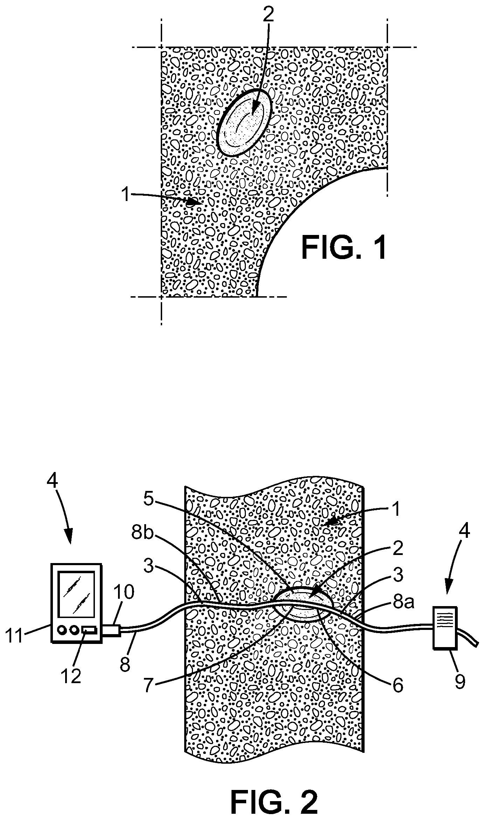

La figure 1 représente schématiquement une partie d'une structure 1, pour laquelle on souhaite déterminer une déformation ou une contrainte mécanique en un emplacement localisé 2. La structure 1 est par exemple une structure rigide, telle qu'une structure de génie civil, notamment constituée de béton, le cas échéant évidé et/ou renforcé par endroits.

Comme visible sur la figure 2, la structure comporte, au niveau de l'emplacement 2, un évidement de forme spécifique, adapté pour recevoir un corps d'épreuve tel qu'il sera décrit plus loin. Par ailleurs, au moins un canal 3 est prévu pour raccorder l'évidement à une zone d'instrumentation 4.

La zone d'instrumentation 4 est par exemple une zone extérieure à la structure 1, ou une zone creuse à l'intérieur de celle-ci, ou accessible depuis l'extérieur de celle-ci par exemple. Dans l'exemple de la figure 2, on fournit 2 zones d'instrumentation 4, et deux canaux 3 de part et d'autre de la structure 1, bien que ceci ne soit qu'un exemple. Les canaux 3 sont de dimensions transversales faibles par rapport à l'évidement, et sont d'une longueur suffisante pour s'étendre de l'évidement à la zone d'instrumentation.

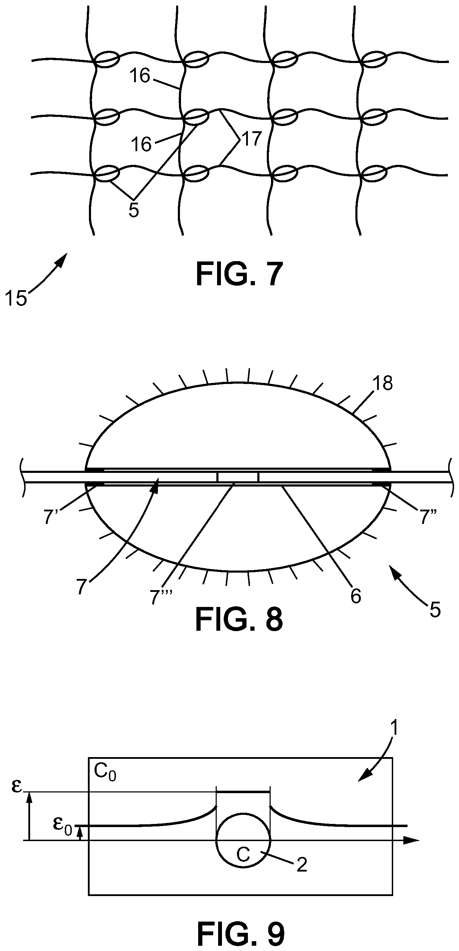

Le système comprend un corps d'épreuve 5 placé dans l'évidement, qui sera décrit plus en détail ci-après, en relation avec la figure 8. Notamment, le pourtour extérieur 18 du corps d'épreuve 5 est fixé au pourtour intérieur de la structure 1 au niveau de l'évidement, de manière à conduire les contraintes exercées dans la structure 1 au corps d'épreuve 5. Notamment, le corps d'épreuve est fixé de manière intégrale sur la totalité de son pourtour extérieur à la structure (mis à part les endroits de raccordement aux canaux 3, comme expliqué ci-dessous). Le corps d'épreuve 5 est percé d'au moins un canal 6, comme représenté sur la figure 2, qui s'étend en communication avec le canal 3.

Le système comprend une fibre de mesure 7, qui s'étend dans le canal 6. Dans l'exemple présenté, la fibre de mesure 7 s'étend à la fois dans le canal 6 et dans le ou les canaux 3 en communication avec celui-ci. De plus, la fibre de mesure 7 est fixée à l'intérieur du corps d'épreuve 5, de sorte que les contraintes exercées dans le corps d'épreuve soient transmises à la fibre de mesure 7. Il est ainsi intrinsèque qu'hormis le canal 6 ou les canaux 6, le corps d'épreuve 5 est plein. Par exemple, la fibre de mesure 7 est fixée par ses extrémités 7' et 7" au corps d'épreuve 5, près de la surface de l'ellipsoïde. Cette fixation peut être faite avec la fibre de mesure 7 légèrement pré-contrainte en traction quand le corps d'épreuve 5 est au repos. En variante, la fibre de mesure 7 pourrait être noyée dans le corps d'épreuve 5. A titre d'exemple, on prévoit une fibre optique 8 continue qui s'étend depuis la zone d'instrumentation 4 à l'intérieur du canal 3, à l'intérieur du canal 7, à l'intérieur du deuxième canal 3 et jusque dans l'autre zone d'instrumentation 4.

La fibre de mesure 7 s'étend rectiligne à l'intérieur du corps d'épreuve, selon une direction d'axe donnée. Par contre, les canaux 3 s'étendent dans toute direction appropriée, notamment pour s'adapter à des canaux naturels de la structure.

On prévoit un système instrumenté pour déterminer les contraintes ou les déformations dans la structure au niveau de l'emplacement 2. Les caractéristiques optiques de la fibre de mesure dans l'emplacement sont rendues dépendantes des contraintes s'exerçant sur elle. La fibre de mesure 7 comprend par exemple une zone active 7‴, par exemple équidistante des extrémités 7' et 7''. La zone active présente une caractéristique élasto-optique, c'est-à-dire que sa transmission optique dépend de sa tension selon l'axe de la fibre 7. On prévoit par exemple un réseau de Bragg susceptible de se déformer en fonction des contraintes mécaniques exercés sur la fibre.

Bien que la présente description soit donnée principalement en référence au mode de réalisation d'une fibre de mesure optique, d'autres technologies de fibres de mesure sont envisageables dans le cadre de l'invention.

Le système comprend également un système d'interrogation comprenant un dispositif de stimulation 9, adapté pour émettre un signal optique en direction de la fibre de mesure 7. Ce signal est transmis par l'intermédiaire de la partie 8a de la fibre optique 8 qui s'étend du dispositif de stimulation 9 au corps d'épreuve. Le système comprend également un système d'acquisition 10, adapté pour détecter un signal optique provenant de la fibre de mesure 7. Ce signal est transmis par l'intermédiaire de la partie 8b de la fibre optique 8 qui s'étend du corps d'épreuve au dispositif d'acquisition 10. Le système comprend également un calculateur 11. Le calculateur est par exemple réalisé sur un circuit imprimé d'une machine programmable, tel qu'un ordinateur, ou autre, et est adapté pour traiter les signaux détectés par le système d'acquisition 10, comme cela sera décrit plus en détail ci-après.

Le calculateur 11 peut traiter des informations, telles que des données stockées dans une mémoire 12, correspondant à des signaux détectés par le dispositif d'acquisition 10, pour déterminer une contrainte s'exerçant dans la structure 1 au niveau de la fibre de mesure 7. Si la fibre de mesure 7 est fixée dans le corps d'épreuve, la contrainte correspond à une contrainte moyenne le long de l'axe de la fibre de mesure 7 mais aussi, grâce aux relations issues du théorème d'Eshelby, à la contrainte en tout point à l'intérieur du corps d'épreuve.

Si les dimensions du corps d'épreuve sont faibles par rapport à celles de la structure (ce qui sera classiquement le cas en génie civil, la dimension du corps d'épreuve étant comprise par exemple entre environ 0,5 cm et 10 cm, et la dimension de la structure étant au moins égale au mètre, parfois supérieure à 10 voire à 100 mètres), on obtient une mesure locale à l'échelle de la structure.

Par ailleurs, le calculateur 11 est également adapté pour déterminer les contraintes dans la structure à l'emplacement de la fibre de mesure, à partir de la contrainte dans la fibre optique. Le calculateur 11 peut comprendre en mémoire une table comprenant les caractéristiques mécaniques du corps d'épreuve. Ces caractéristiques vont typiquement comprendre le ou les modules d'élasticité pour chacune des directions principales du matériau, voire le ou les coefficients de Poisson dans ce référentiel, le cas échéant en fonction de certains nombres de paramètres extérieurs (température, etc...) .

Les équations présentées dans la communication de J.D. Eshelby (The détermination of the elastic field of an ellipsoïdal inclusion and related problems , J. D. Eshelby, Proceedings of the Royal Society of London, Vol. 241, (1957), pp. 376-396]) sont programmées dans le calculateur. Elles permettent d'estimer la contrainte et la déformation qui serait présente dans la structure 1 à l'endroit du corps d'épreuve mais en l'absence de celui-ci à partir de la contrainte mesurée dans l'ellipsoïde par les fibres de mesure.

Le fait de disposer les capteurs à l'intérieur d'un ellipsoïde plein n'est pas anodin. Comme expliqué par Eshelby, dans le cas où l'inclusion et la matrice ont un comportement linéaire élastique, et si le milieu est soumis à un chargement « à l'infini », le champ de déformation (et le champ de contrainte) est uniforme dans l'inclusion (cf. figure 9). Ainsi, qu'importe l'endroit où on positionne les parties sensibles des fibres uniaxiales de mesure à l'intérieur de l'ellipsoïde, les quantités relatives à un seul et même tenseur seront mesurées en tout point de l'ellipsoïde. Ceci s'applique quand, comme dans le cas présent, le corps d'épreuve est petit par rapport au gradient du champ de déformation.

On considère une matrice isotrope d'extension infinie. Son élasticité isotrope est donnée par son tenseur d'élasticité $C_0$. C'est la grandeur qu'on cherche à déterminer.

Au sein de ce milieu existe une inclusion ellipsoïdale 2 faite d'un matériau homogène et isotrope dont le tenseur d'élasticité est C. Implicitement, on comprend qu'une inclusion ellipsoïdale faite d'un matériau homogène est pleine.

Ce système est soumis, à l'infini, à une déformation $\varepsilon_0$. En l'absence de l'inclusion, cette déformation serait homogène (identique en tous points). En présence de l'inclusion, la déformation dans la matrice est perturbée localement et la déformation $\varepsilon$ dans l'inclusion est différente mais homogène (voir figure 9), ce qui est montré par les calculs d'Eshelby.

C'est le premier avantage pour le capteur : on peut faire la mesure n'importe où dans cet ellipsoïde : il n'y a pas besoin de moyenne spatiale.

Dans un mode de réalisation, le tenseur des déformations dans l'inclusion $\varepsilon$ est mesuré par 6 capteurs unidimensionnels, comme décrit par ailleurs. Depuis le calcul d'Eshelby [1957], cette déformation $\varepsilon$ est reliée à la déformation à l'infini $\varepsilon_0$ par la relation de localisation :

$$\varepsilon = (I + P_0 : (C-C_0))^{-1} : \varepsilon_0 \quad (1)$$

où I est le tenseur identité du quatrième ordre et $P_0$ le tenseur de Hill qui dépend de la géométrie de l'ellipsoïde et de $C_0$. Si les tenseurs d'élasticité C de l'inclusion et $C_0$ de la matrice sont connus, cette relation, une fois inversée nous permet de remonter analytiquement à la déformation $\varepsilon_0$ qui existerait dans la matrice en l'absence de l'inclusion, ce qui est un avantage certain : la grandeur fournie est la déformation que l'on aurait dans la structure 1 en l'absence du capteur.

Un exemple plus détaillé sera décrit ci-après dans le cas d'une inclusion 2 de forme sphérique (cas simplifié pour faciliter la lecture).

Si l'on considère un milieu homogène isotrope respectivement pour la matrice et l'inclusion, leurs tenseurs d'élasticité s'expriment sous la forme de Kelvin suivante :

$$C_0 = 3K_0 P^H + 2\mu_0 P^D \quad (2)$$

$$C = 3K P^H + 2\mu P^D \quad (3)$$

dans laquelle $K_0$ et K sont respectivement les modules de compressibilité hydrostatiques de la matrice et de l'inclusion, $\mu$ et $\mu_0$ leurs modules de cisaillement. Ces grandeurs sont reliées respectivement aux modules d'Young ($E_0$; E) et aux coefficients de Poisson ($\nu_0$; $\nu$) habituels par :

$$3K_0 = E_0/(1-2\nu_0) \quad 3K = E/(1-2\nu) \quad (4)$$

$$2\mu_0 = E_0/(1+\nu_0) \quad 2\mu = E/(1+\nu) \quad (5)$$

Les tenseurs $P^H$ et $P^D$ sont respectivement les projecteurs hydrostatiques et déviatoriques. Leur expression est donnée en fonction du symbole de Kronecker :

$$(P^H)_{ijkl} = (1/3)\delta_{ij}\delta_{kl} \quad (6)$$

$$(P^D)_{ijkl} = (1/2)( \ \delta_{ik} \ \delta_{jl} + \ \delta_{il} \ \delta_{jk}) - (\delta_{ij} \ \delta_{kl})/3 \qquad (7)$$

L'identité du 4ème ordre I est la somme des deux projecteurs orthogonaux $P^H$ et $P^D$ soit :

$$(I)_{ijkl} = (1/2)( \ \delta_{ik} \ \delta_{jl+} \ \delta_{il} \ \delta_{jk}) \qquad (8)$$

Dans Eshelby [1957], on trouve l'expression du tenseur de Hill $P_0$ dans le cas de l'inclusion sphérique :

$$P_0 = [1/(3K_0+4\mu_0)].P^H$$
$$+ [(3/5\mu_0).(K_0+2\mu_0)/(3K_0+4\mu_0)].P^D \qquad (9)$$

et donc tous les termes de la relation de localisation (1) sont définis. En regroupant toutes ces expressions, on transforme la relation de localisation inverse (inverse de l'équation (1)) qui donne la valeur recherchée de la déformation dans la matrice à l'infini $\varepsilon_0$ en fonction de la déformation dans l'ellipsoïde $\varepsilon$ (mesurée)

$$\varepsilon_0 = \{[(3K+4 \ \mu_0)/(3K_0+4 \ \mu_0)]P^H +$$
$$[3K_0(3\mu_0+2\mu)+4\mu_0(2\mu_0+3\mu))/(5\mu_0(3K_0+4\mu_0))]P^D\}: \varepsilon \qquad (10)$$

$\varepsilon_0$ est un exemple de valeur qu'on cherche à déterminer. En effet, pour un tel système, $\varepsilon_0$ représente également la déformation locale dans la structure à l'emplacement du corps d'épreuve en l'absence du corps d'épreuve.

Ceci est un exemple de relation utile dans le cas du système proposé. En utilisant la relation de comportement, on en déduit l'autre résultat de mesure, le tenseur des contraintes dans la matrice à l'infini (c'est-à-dire localement à l'emplacement du corps d'épreuve dans le cas théorique d'une absence de capteur) :

$$\sigma_0 = [(3K_0.(3K+4\mu_0)/(3K_0+4\mu_0)].P^H$$
$$+(2/5).[(3K_0.(3\mu_0+2\mu)+4\mu_0.(2\mu_0+3\mu))/(3K_0+4\mu_0)]P^D): \varepsilon \quad (11)$$

De manière équivalente, en nommant $(\varepsilon^H; \varepsilon_0{}^H)$ et $(\varepsilon^D; \varepsilon_0{}^D)$ les parties hydrostatiques et déviatoriques respectives des déformations dans l'inclusion $\varepsilon$ et à l'infini $\varepsilon_0$ on a :

$$\varepsilon_0{}^H = (3K+4\mu_0)/(3K_0+4\mu_0) \ \varepsilon^H \qquad (12)$$

$$\varepsilon_0{}^D = [(3K_0.(3\mu_0+2\mu)+$$
$$4\mu_0.(2\mu_0+3\mu))/(5\mu_0.(3K_0+4\mu_0))]\varepsilon^D \quad (13).$$

On rappelle aussi l'expression traditionnelle de ces termes sans utiliser de projecteurs :

$$\varepsilon_0{}^H = (1/3)\mathrm{trace}(\varepsilon_0)I \quad (14)$$

$$\varepsilon_0{}^D = \varepsilon_0 - \varepsilon_0{}^H \qquad (15)$$

Le tenseur des contraintes dans la matrice $\sigma_0$ à l'infini (ou en l'absence de capteur) est obtenu à l'aide de la relation de comportement (2) :

$$\sigma_0{}^H = (3K_0 \,.\, (3K+4\mu_0)\,/\,(3K_0+4\mu_0)\,.\;\;\varepsilon^H$$

$$\sigma_0{}^D = (2/5)\,.\,[\,(3K_0\,.\,(3\mu_0+2\mu)\,+$$
$$4\mu_0\,.\,(2\mu_0+3\mu))\,/\,(3K_0+4\mu_0)\,]\,\varepsilon^D \qquad (17)$$

Dans le cas d'une structure hétérogène (dans le cas où elle contient des inclusions de caractéristiques mécaniques différentes (comme dans le cas des granulats dans les bétons par exemple)), on dispose de préférence les parties sensibles des fibres relativement loin de la surface de l'ellipsoïde (donc vers l'intérieur) afin de lisser le champ de contrainte dans la structure. La forme ellipsoïdale permet en outre de ne pas créer de concentration de contraintes propres à entraîner une fissuration de la structure. De plus, on pourra prévoir un matériau constitutif de l'ellipsoïde dont la contrainte à la rupture est supérieure à celle du matériau de la structure.

Notamment, quand on dispose d'un corps d'épreuve ellipsoïdal, il est possible de déterminer le tenseur des contraintes dans la structure dans l'emplacement à partir du tenseur des déformations détectées dans la fibre. On peut pratiquer en deux étapes en déterminant la contrainte uniforme dans le corps d'épreuve à partir des déformations du tenseur mesuré par les fibres, puis on détermine le tenseur de contraintes dans la structure à l'emplacement du corps d'épreuve par le théorème d'Eshelby, à partir du tenseur des contraintes dans le corps d'épreuve.

Dans le cas présent où on dispose d'une unique fibre de mesure uniaxiale dans le corps d'épreuve, la déformation mesurée peut être associée à l'état de tension (traction ou compression) moyen suivant la direction de la fibre de mesure.

En mécanique, on considère que l'espace comporte six dimensions. Ce sont trois dimensions d'axe principal, ainsi que trois dimensions associées à des paires de ces axes.

Dans le cas où l'on dispose de six fibres de mesure réparties suivant six directions de l'espace $\mathbf{n}^l$ (où $\mathbf{n}^l$ est le vecteur unitaire correspondant à la direction de la fibre de mesure l=(1,...6)), on se place dans l'hypothèse (découplage) où la fibre mesure une déformation scalaire $\varepsilon^l$ assimilable à sa variation relative de longueur $\Delta L^l/L^l$ si $L^l$ désigne sa dimension initiale et $\Delta L^l$ la variation de dimension par rapport à la dimension initiale. Si on nomme $\varepsilon$ le tenseur des déformations dans le corps d'épreuve, $\varepsilon^l = \mathbf{n}^l . \underline{\varepsilon} . \mathbf{n}^l$ s'applique où $\varepsilon^l$ désigne la i^ème composante du tenseur des déformations. Sous forme de composantes, cela s'écrit $\varepsilon^l = \varepsilon_{ij}\, n^l_i\, n^l_j$, où $n^l_i$, $n^l_j$ désigne la i^ème, respectivement la j^ème composante du vecteur $n^l$ et $\varepsilon_{ij}$ la composante $(i,j)$ du tenseur de déformations. Les six équations scalaires obtenues peuvent se mettre sous forme matricielle $N^{lJ}\, \varepsilon_J = \varepsilon^l$ où l'indice J varie de 1 à 6 en fonction des indices i et j selon la convention (11,22,33,23,31,12) et où $N^{lJ} = n^l_i\, n^l_j$. L'inversion de cette équation matricielle est alors réalisée, procurant le tenseur des déformations $\underline{\varepsilon}$ (sous la forme $\varepsilon_J$ ou encore $\varepsilon_{ij}$) recherché. L'inversibilité de la matrice $N^{lJ}$ est garantie par l'indépendance des directions de mesure $\mathbf{n}^l$. Le choix de directions $\mathbf{n}^l$ pavant régulièrement l'espace (les normales d'un dodécaèdre) garantit une robustesse maximale de la mesure.

Le tenseur $\underline{\varepsilon}$ obtenu est le tenseur des déformations dans le corps d'épreuve ellipsoïdal. Il est associé au tenseur des contraintes $\underline{\sigma}$ dans ce même objet par la loi de Hooke :
$\underline{\sigma} = \lambda\mathrm{trace}(\underline{\varepsilon})\underline{\mathrm{Id}} + 2\boldsymbol{\mu}\underline{\varepsilon}$ où $\lambda$ et $\boldsymbol{\mu}$ sont les constantes d'élasticité de Lamé du corps d'épreuve, et Id la matrice d'identité. Le tenseur des contraintes d'intérêt pour le système est celui qui existerait dans la structure en l'absence du capteur : on le nomme $\underline{\sigma}_0$. Il est relié au tenseur des contraintes mesuré $\underline{\sigma}$ par les équations d'Eshelby citées ci-dessus (elles sont notablement plus simples dans le cas d'un capteur sphérique). Ainsi on détermine $\underline{\sigma}_0$ à partir de $\sigma$ par l'équation d'Eshelby. Enfin, à partir de $\underline{\sigma}_0$ le tenseur des déformations $\underline{\varepsilon}_0$ qui existerait dans la matrice en l'absence du capteur s'obtient très simplement par l'inversion de la loi de Hooke $\underline{\sigma}_0 = \lambda_0\mathrm{trace}(\underline{\varepsilon}_0)\underline{\mathrm{Id}} + 2\mu_0\underline{\varepsilon}_0$ où $\lambda_0$ et $\boldsymbol{\mu}_0$ sont les constantes d'élasticité de Lamé de la matrice (de la structure). Le capteur fournit donc ces tenseurs $\underline{\varepsilon}_0$ et/ou $\underline{\sigma}_0$, relatifs à l'état de contrainte et de déformation de la structure, en fonction du temps et à l'emplacement du capteur.

En variante, dans le cas où les fibres sont totalement noyées dans le corps d'épreuve, un couplage peut apparaître et l'hypothèse précédente de découplage conduisant à $\varepsilon^l = \mathbf{n}^l . \underline{\varepsilon} . \mathbf{n}^l = \mathbf{N}^l : \underline{\varepsilon}$ n'est plus valable. Dans ce cas, les grandeurs mesurées par les fibres $\varepsilon^l$ sont données par $\varepsilon^l = \mathbf{M}^l : \underline{\varepsilon}$ dans laquelle $\mathbf{M}^l$ dépend de $\mathbf{n}^l$ et des directions orthogonales à $\mathbf{n}^l$. L'inversion, légèrement plus complexe, est obtenue par le calcul des coefficients de couplage (influence des directions orthogonales) intervenants dans $\mathbf{M}^l$.

La mesure de la déformation $\varepsilon^l$ de la fibre peut être obtenue par une mesure de variation d'indice optique. La relation générale est $\Delta(1/\eta^2_{ij}) = P_{ijkl}\, e_{kl}$ dans laquelle le tenseur $\underline{e}$ représente la déformation dans la fibre, $\underline{\eta}$ est le tenseur des indices optiques, $\mathbf{P}$ le tenseur elasto-optique du matériau constitutif de la fibre (par exemple de la silice) et $\Delta$ le symbole de variation entre les états repos et actuels. La liaison entre la fibre mince et le corps d'épreuve massif garantit que la déformation de la fibre et du corps d'épreuve sont identiques dans la direction de la fibre : $\mathbf{n}^l . \underline{\varepsilon} . \mathbf{n}^l = \mathbf{n}^l . \underline{e} . \mathbf{n}^l$. Les autres composantes du tenseur $\underline{e}$ seront soit liées à $\underline{\varepsilon}$ et aux caractéristiques d'élasticité par un calcul d'Eshelby (cette fois pour une inclusion cylindrique) dans le cas où la fibre est « collée » à la matrice soit seront simplement liées aux caractéristiques élastiques de la fibre (son coefficient de Poisson dans le cas où elle est mécaniquement isotrope) dans le cas où elle est simplement fixée en ses extrémités. Dans ce second cas, on retrouve l'hypothèse de découplage citée au paragraphe précédent. On peut prévoir une pré-tension de la fibre, surtout dans le cas de la fibre collée en ses extrémités, afin que celle-ci reste en tension quelle que soit la sollicitation sur le corps d'épreuve.

On notera qu'on ne procède pas nécessairement à un calcul en deux étapes, et que le calculateur pourra le cas échéant, déterminer directement la contrainte locale à partir des signaux détectés et des propriétés mécaniques du matériau constitutif du corps d'épreuve et de celui de la structure, sur la base de l'enseignement ci-dessus.

Les corps d'épreuve apparaissant plus particulièrement sur les figures 1, 2, 3 et 6 sont de formes ellipsoïdales mais peuvent être choisies pour être sphériques utilisées par exemple dans des cas où on ne souhaiterait pas introduire une direction privilégiée pour des mesures dans un milieu isotrope ou bien si on ne peut maîtriser l'orientation de ce corps d'épreuve lors de l'inclusion du corps d'épreuve dans la structure. D'une autre manière la forme choisie pourrait être un ellipsoïde allongé selon une ou deux directions de l'espace particulières et répondre à un besoin de mesure selon des directions de l'espace privilégiées. De manière similaire, le matériau constituant l'ellipsoïde peut être choisi pour être isotrope de manière à transmettre de manière identique les contraintes dans toutes les directions de l'espace mais pourrait pour certaines applications être choisi pour être anisotrope, c'est-à-dire se comporter mécaniquement de façons différentes selon une ou plusieurs dimensions de l'espace. Ce dernier cas pourrait par exemple s'appliquer à des situations où les grandeurs mesurées présentent des différences dans leur ampleur ou dans le traitement qui leur est apporté lors de l'acquisition des mesures, ou dans le cas où le matériau constitutif de la structure est lui-même anisotrope. Le matériau constitutif peut être choisi pour être homogène au moins relativement aux dimensions de la longueur de mesure des fibres optiques de mesure de manières à éviter des variations locales lors de la transmission des contraintes du corps d'épreuve aux fibres de mesure. L'utilisation d'un corps d'épreuve présente également l'avantage supplémentaire de permettre de choisir un matériau particulièrement adapté à la transmission des contraintes depuis le volume de mesure vers la fibre de mesure. Il permet ainsi de mesurer les grandeurs présentes dans un volume de mesure qui serait constitué d'un matériau peu propice à l'intégration de fibres de mesures. Ce qui peut être le cas pour un matériau du volume de mesure qui serait inhomogène ou présentant des discontinuités ou simplement impropre à assurer une jonction mécanique avec le matériau constituant l'extérieur de la fibre de mesure. Le matériau choisi pour réaliser le corps d'épreuve peut être choisi de manière à optimiser la précision du dispositif de mesure, par exemple en ayant des propriétés mécaniques très voisines ou identiques à celle du volume de mesure. Un tel choix des propriétés mécaniques permet, en plus d'un choix de forme ellipsoïdale, de minimiser les concentrations de contraintes au voisinage du dispositif de mesure et de diminuer les risques de fragilisation de la structure par formation de fissures. L'ajout de corps d'épreuve inclus dans un volume de mesure qui représente une structure devrait de préférence ne pas se traduire par une fragilisation du matériau. Le matériau choisi pour constituer le corps d'épreuve pourrait être choisi selon l'application envisagée pour d'une part la mise en oeuvre et d'autre part pour la fabrication du dispositif de mesure. Les choix peuvent se porter sur des bétons fins (par exemple de type Ductal), des résines qui peuvent être chargées de renforts de manière à réaliser des composites dont la composition permet d'en ajuster les propriétés mécaniques, des métaux, des verres ou bien des céramiques. Suivant le matériau les fibres peuvent être introduites par perçage ou par surmoulage. Par ailleurs des critères supplémentaires de choix du matériau du corps d'épreuve peuvent être liés à la durabilité, la toxicité ou le coût.

Ainsi, le système qui vient d'être décrit peut être utilisé de la manière suivante : Un dispositif de stimulation 9, type LASER, émet un signal optique dans la fibre optique. Le signal optique est propagé le long de la fibre optique et à travers la fibre de mesure 7, où il est modulé en fonction des contraintes mécaniques exercées sur la fibre 7. Le signal optique modulé est transmis le long de la fibre optique 8b jusqu'à un détecteur 10, par exemple de type CDD, où le signal est détecté, puis stocké dans la mémoire 12 du calculateur. On notera qu'une telle transmission est possible même en cas de déformations au niveau du corps d'épreuve, car les fibres de mesure 7 opèrent comme des guides d'onde. Le calculateur traite les informations pour déterminer une contrainte dans la structure 1 au niveau du corps d'épreuve.

Cette interrogation peut être répétée au cours du temps, par exemple de manière périodique. Ainsi, le calculateur est capable de surveiller une évolution temporelle de la contrainte locale exercée. Le calculateur peut être couplé à des moyens d'alerte au cas où une comparaison des contraintes détectées avec une contrainte prédéterminée n'était pas jugée satisfaisante.

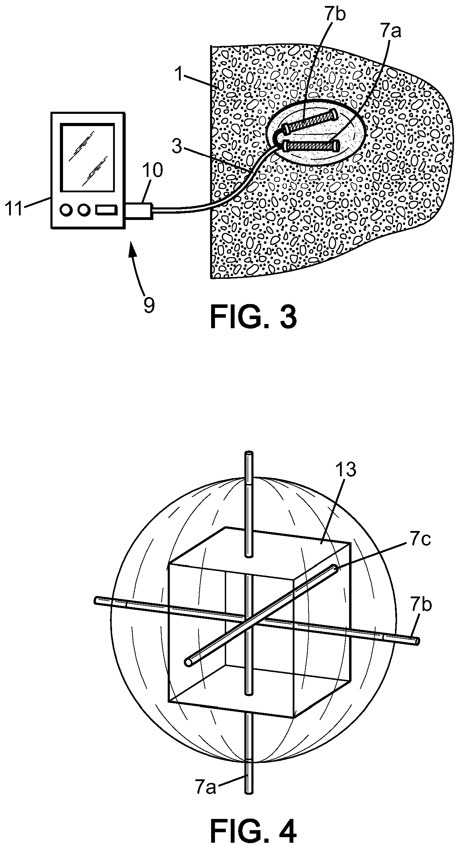

Comme on l'aura compris de la description de la figure 2 ci-dessus, le théorème d'Eshelby permet de retrouver différentes composantes du tenseur de contraintes à l'emplacement localisé, sous réserve qu'on sache mesurer autant de composantes locales indépendantes. Ainsi, selon un deuxième mode de réalisation, tel que représenté sur la figure 3, on dispose deux fibres de mesures 7a et 7b selon deux axes indépendants (notamment deux axes normaux définissant un plan de mesure). Par ailleurs, le mode de réalisation de cette figure diffère également du premier mode de réalisation en ce qu'un système intégré réalise à la fois la stimulation et l'acquisition. Ainsi, on ne détecte pas le signal optique transmis par la fibre optique, mais la réflexion de ce signal. Ainsi, le canal 3 regroupe les 2 fibres optiques adressant chacune des fibres de mesure au sein d'un câble optique. Le diamètre de ce genre de câble reste faible par rapport aux dimensions du corps d'épreuve, et a fortiori de la structure.

En réalisant 2 mesures selon des directions indépendantes, comme montré ci-dessus, on peut déterminer deux relations entre les composantes du tenseur de déformation dans la structure au niveau du corps d'épreuve, en résolvant un système de deux équations à deux inconnues. Si on oriente le capteur avec les fibres de mesure alignées avec les directions principales des efforts en cet endroit, déterminées a priori par une analyse structurelle, on obtiendra des composantes principales du tenseur de déformation.

En variante, comme représenté sur la figure 4, le corps d'épreuve comprend 3 fibres de mesure 7a, 7b, 7c, disposées selon 3 directions indépendantes, par exemple normales aux faces d'un cube 13. Les fibres sont espacées légèrement pour ne pas être concourantes. En réalisant 3 mesures indépendantes, comme montré ci-dessus, on peut déterminer trois composantes du tenseur des déformations dans la structure au niveau du corps d'épreuve, en résolvant un système de trois équations à trois inconnues.

La somme de ces trois mesures est la trace du tenseur des déformations, qui donne accès à la trace du tenseur des contraintes qui est un invariant : c'est trois fois la pression.

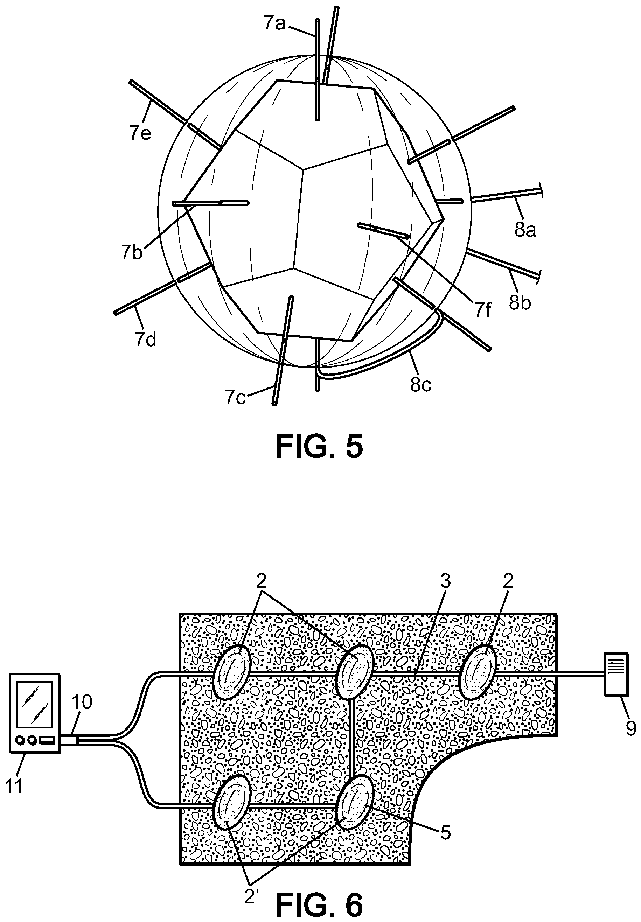

Selon encore un mode de réalisation, tel que représenté sur la figure 5, on dispose 6 fibres de mesure 7a-7f. Celles-ci sont disposées par exemple selon les normales aux faces d'un dodécaèdre régulier. Ces 6 mesures constituent 6 variables indépendantes qui permettent de déterminer les 6 composantes du tenseur des contraintes dans la structure à l'emplacement du corps d'épreuve, par résolution d'un système de 6 équations à 6 inconnues. On utilisera par exemple 6 fibres optiques, plus ou moins enroulées autour du corps d'épreuve, et regroupées en un même câble optique courant dans un canal 3.

En variante, on pourrait prévoir d'adresser une pluralité de mesures avec une même fibre optique par analyse spectrale. Pour ce faire, on pourrait prévoir une fibre optique qui présente un premier tronçon 8a s'étendant du dispositif de stimulation au corps d'épreuve, et un deuxième tronçon formant une première fibre de mesure stimulable à une longueur d'onde donnée, comme dans le mode de réalisation de la figure 1. Au lieu de connecter la sortie de la fibre de mesure directement au capteur 10, on prévoit un tronçon supplémentaire 8c qui va s'enrouler autour du corps d'épreuve pour raccorder la première fibre de mesure à une deuxième fibre de mesure s'étendant selon une deuxième direction. La deuxième fibre de mesure est stimulable à une deuxième longueur d'onde distante de la première. On procède ainsi pour raccorder le nombre de fibres de mesure souhaitée, avant de raccorder en sortie au détecteur 10. La stimulation peut ainsi comprendre une addition de signaux présentant des caractéristiques différentes, et la détection est capable de démoduler le signal afin d'attribuer à chaque fibre de mesure la partie du signal qui lui est propre. Un tel mode de réalisation est possible pour entre 2 et 6 fibres de mesure, voire plus si nécessaire.

Par ailleurs, en utilisant deux fibres de mesure parallèles selon une direction dans l'ellipsoïde, on peut obtenir une idée de la dispersion des caractéristiques des fibres de mesure selon une direction normale à cette direction. Ainsi, les modes de réalisation ci-dessus peuvent être complétées par une ou plusieurs fibres de mesure en parallèle.

La description ci-dessus se rapporte à un unique emplacement de la structure 1. Comme représenté en variante sur la figure 6, on peut reproduire le même système pour un ensemble d'emplacements 2 de la structure 1. Ceci s'applique pour l'un quelconque des modes de réalisation décrits plus haut. Le cas échéant, on utilise un unique système de stimulation 9 et de détection 10 et un calculateur 11 unique. Les corps d'épreuve 5 sont reliés entre eux par des câbles optiques situés dans des canaux 3 s'étendant entre les différents emplacements.

Ainsi, la modulation spectrale décrite plus haut ne s'applique pas nécessairement uniquement au cas de deux portions de fibre d'un même corps d'épreuve s'étendant selon deux directions différentes. On pourrait par exemple prévoir qu'une même fibre optique s'étende de manière continue à travers différents corps d'épreuve, et que la modulation spectrale corresponde à l'emplacement de chaque corps d'épreuve. En variante, on pourra utiliser d'autres méthodes de mesures, dites distribuées, qui permettent de se localiser dans la fibre et donc de savoir dans quel capteur on est.

On peut ainsi réaliser une cartographie des tenseurs des contraintes, ce qui permet de réaliser une carte de certaines contraintes, et évidemment de suivre l'évolution de ces contraintes dans le temps, comme dans le cas d'un capteur localisé unique. Ainsi, ce n'est pas nécessairement une variation locale de contrainte qui peut déclencher une alarme, mais l'observation de toute anomalie à partir du champ de contraintes temporelles détecté, par exemple, par rapport à une carte de référence établie en fonction du chargement extérieur par un calcul de structure éventuellement aidé par une mesure sur la structure à un instant initial réputé vierge de défaut.

Les présents modes de réalisation peuvent être intégrés dans une structure existante, par exemple en réalisant dans la structure un emplacement de forme ellipsoïdale, en creusant au moins un canal, voire des canaux s'étendant de part et d'autre de cette forme, en tendant une fibre optique dans ce ou ces canaux, la partie active de la fibre s'étendant au niveau de l'emplacement de forme ellipsoïdale, puis en injectant un produit liquide apte à solidifier (par exemple un béton de propriétés mécaniques connues) dans l'emplacement afin d'y noyer la fibre.

En variante, comme représenté sur la figure 7, on pourra prévoir d'équiper directement une structure en cours de fabrication d'un système de contrôle intégré du type décrit précédemment. Ainsi, on prévoit un filet 15 à deux dimensions comprenant différents corps d'épreuve 5 disposées par exemple en lignes et en colonnes et reliés entre eux par des câbles optiques 16 selon un schéma similaire à celui décrit sur la figure 6. En variante, un filet tri-dimensionnel est aussi envisageable.

Selon un premier exemple, chaque câble optique 16 peut par exemple comporter un ensemble de n fois 6 fibres optiques, où n représente le nombre de corps d'épreuve le long de l'axe. 6 des fibres optiques adressent chacune un des 6 canaux d'un corps d'épreuve alors que les autres fibres optiques passent à côté de celui-ci. En sortie, l'ensemble des fibres sont à nouveau regroupées et dirigées vers le corps d'épreuve suivant, où 6 autres fibres adressent chacune un canal respectif de celui-ci, et ainsi de suite. Ainsi, un câble optique 16 vertical adresse l'ensemble des corps d'épreuve 14 d'une colonne. Les extrémités des câbles verticaux sont regroupées ensemble et dirigées vers un système de stimulation/acquisition tel que précédemment décrit. Le cas échéant, les câbles verticaux sont reliés ensemble par des éléments de maintien 17 qui, dans cet exemple, ne sont pas nécessairement optique. En variante, une fibre optique pourra adresser chacun des 6 canaux d'un même corps d'épreuve, comme indiqué plus haut, où le même canal de l'ensemble des corps d'épreuve, et les informations seront obtenues par analyse spectrale ou spatiale, comme indiqué plus haut. En variante, les câbles 17 pourront également être des câbles optiques adressant certains canaux de certains corps d'épreuve. Ainsi, on pourra varier facilement la mise en oeuvre d'un tel filet pour s'adapter aux spécificités de la mesure à accomplir. Pour réaliser un système 3D, on peut proposer plusieurs tels filets disposés les uns derrière les autres avec un certain espacement, dans le plan normal à celui de la figure 7. Ce filet pourra être fixé dans le béton d'une structure en cours de fabrication.

Dans les exemples ci-dessus, on a principalement fait référence à des applications de type génie civil, où la fibre optique est noyée dans un corps d'épreuve en béton, lui même destiné à être intégré dans une structure en béton. En variante, l'invention pourrait être appliquée dans d'autres types de structures. On connaît par exemple des structures composites constituées de plastiques renforcés par des fibres, notamment des fibres de verre. Le fait d'utiliser des fibres optiques, donc notamment réalisables en verre, pour mettre en oeuvre la détection ci-dessus, présente un intérêt particulier pour adapter le système ci-dessus à de tels systèmes composites. En effet, la partie mesure de la fibre optique peut alors être noyée dans un plastique du genre de ceux utilisés dans de tels structures, et le reste de la fibre optique pourra avoir des propriétés mécaniques similaires à celles des fibres du matériau composite. On notera que de telles structures comprennent des fibres s'étendant le plus souvent dans des plans, et que, pour ce genre d'application, on risque d'utiliser préférablement les modes de réalisation permettant de déterminer les composantes du tenseur de contraintes dans ce plan.

La connaissance des propriétés mécaniques du matériau du corps d'épreuve permet de passer aisément du tenseur des contraintes à celui des déformations. Ainsi, bien qu'on ait ici parlé principalement du tenseur des contraintes, on comprendra qu'une description similaire pourra être fait avec le tenseur des déformations.

En variante, le calculateur pourra être muni de moyens de communication, le cas échéant sans fil, pour transmettre un signal d'alarme à un centre de surveillance. Par conséquent, le calculateur pourra être intégré à la structure, voire même à un corps d'épreuve. En variante, le détecteur pourra être muni de moyens de communication, le cas échéant sans fil, pour transmettre à un calculateur distant les signaux mesurés. Le cas échéant, le calculateur pourrait être divisé en deux parties communiquant entre elles par des moyens de communication, le cas échéant sans fil.

En variante, on pourra disposer un capteur de température au sein ou à proximité du corps d'épreuve, et un câble électrique transmettant à l'unité centrale une valeur locale de température mesurée. Cette température peut être prise en compte dans le calcul des contraintes.

Dans les exemples prévus ci-dessus, on a fait référence à une fibre de mesure qui est un composant séparé du corps d'épreuve assemblé au corps d'épreuve en étant inséré à travers un canal du corps d'épreuve et fixé à celui-ci.

En variante, on pourrait réaliser une fibre de mesure intégrée directement dans le corps d'épreuve. Dans la version optique, on peut par exemple inscrire un guide d'onde (comprenant la zone active 7‴ (comprenant par exemple un réseau de Bragg)) directement dans le corps d'épreuve. Des procédés de photoinscription, d'implantation ionique, ou d'irradiation sont envisageables pour cette mise en oeuvre. Une telle mise en oeuvre permet d'améliorer encore l'homogénéité mécanique du dispositif de mesure. On peut ainsi réaliser un guide d'onde inscrit tel que, par exemple, un FBG (acronyme de l'expression « Fiber Bragg Grating ») ou un LPG (« Long Period Grating »). Dans ce cas, le corps d'épreuve 5 pourra avantageusement être réalisé en un matériau translucide.

Le corps d'épreuve 5 ainsi formé peut être disposé dans la structure avec les le guide d'onde inscrit intégré qui vient d'être décrit en correspondance avec des fibres optiques de liaison 8 disposées dans les canaux 3 et débouchant vers le système de stimulation 9 et/ou de détection 10.

En variante encore, les systèmes de stimulation 9 et/ou de détection 10 peuvent être intégrés au corps d'épreuve 5, dans l'une ou l'autre des variantes proposées ci-dessus. Dans ce cas, le moyen de liaison de la fibre de mesure 7 ou du guide d'onde inscrit au système de stimulation 9 et/ou de détection 10 peuvent comprendre tout moyen de fixation du système de stimulation 9 et/ou de détection 10 permettant de fixer celui-ci en correspondance avec la fibre de mesure 7, par exemple par collage ou fixation mécanique au corps d'épreuve.

Les systèmes de stimulation 9 et/ou de détection 10 peuvent être reliés par un ou des fil(s) électrique(s) 19 à l'extérieur, notamment pour l'alimentation en énergie. Le système de détection 10 peut être relié à l'extérieur, par des moyens de liaison filaires ou non filaires, pour la transmission des mesures. Quand le calculateur 11 est intégré à un corps d'épreuve, comme décrit plus haut, il peut être relié par un ou des fil (s) électrique (s) 19 à l'extérieur, notamment pour l'alimentation en énergie. Il peut être relié à l'extérieur, par des moyens de liaison filaires ou non filaires, pour la transmission des résultats. Pour la transmission non filaire dans le béton, on peut prévoir une transmission par ondes acoustiques. Les fils électriques peuvent être configurés en filets par exemple comme représenté sur les figures 6 et 7.

## Revendications

1. Dispositif de mesure des contraintes et/ou déformations locales à l'intérieur d'un volume de mesure (2) d'une structure (1) de matériaux présentant des propriétés mécaniques connues, le dispositif comprenant :

   - un corps d'épreuve (5) de forme ellipsoïdale destiné à être inclus dans le volume de mesure (2), et constitué de matériau homogène aux propriétés mécaniques connues,
   - k fibres de mesure (7, 7a-7f) de déformation disposées selon k directions indépendantes et attachées à l'intérieur dudit corps d'épreuve (5), de sorte que des déformations du corps d'épreuve (5) soient transmises aux fibres de mesure (7, 7a-7f), k étant compris entre 2 et 6,
   - des moyens de liaison (8, 8a-8c) des k fibres de mesure (7, 7a-7f) à un système (9, 10, 11) adapté pour détecter des signaux provenant des fibres de mesure (7, 7a-7f) représentatifs des déformations des fibres de mesure (7, 7a-7f) et déterminer les contraintes et/ou les déformations locales à partir d'au moins des signaux détectés et des propriétés mécaniques connues des matériaux du corps d'épreuve (5) et de la structure (1), les k fibres de mesure (7, 7a-7f) étant agencées pour déterminer des composantes indépendantes du tenseur des contraintes dans le corps d'épreuve (5).

2. Dispositif selon la revendication 1, dans lequel les fibres de mesure sont des fibres optiques de mesure (7, 7a-7f), dans lequel les moyens de liaison (8, 8a-8c) sont adaptés pour lier les fibres de mesure à un système (9) adapté pour stimuler les fibres optique de mesure (7, 7a-7f).

3. Dispositif selon la revendication 2, dans lequel les moyens de liaison sont des dispositifs comprenant des fibres optiques (8, 8a-8c) en communication optique avec les fibres de mesure (7, 7a-7f).

4. Dispositif selon la revendication 3, dans lequel les moyens de liaison (8, 8a-8c) sont adaptés pour transmettre en direction des fibres de mesure (7, 7a-7f) un signal de stimulation, et transmettre depuis les fibres de mesure (7, 7a-7f) un signal provenant d'une interaction entre les fibres de mesure (7, 7a-7f) et le signal de stimulation.

5. Dispositif selon l'une quelconque des revendications précédentes, présentant l'une des caractéristiques suivantes :

   - k est égal à 3 ;
   - k est égal à 6 et les axes des fibres de mesure (7, 7a-7f) sont placés sensiblement perpendiculairement aux faces d'un dodécaèdre régulier.

6. Dispositif selon l'une quelconque des revendications précédentes, comprenant en outre ko fibres de mesure de déformation supplémentaires agencées de manière non indépendante dans les fibres de mesure (7, 7a-7f), où ko est compris entre 1 et k.

7. Dispositif selon l'une quelconque des revendications précédentes, dans lequel chaque fibre de mesure (7, 7a-7f) est attachée en ses extrémités (7', 7'') au corps d'épreuve (5).

8. Dispositif selon l'une quelconque des revendications précédentes, comprenant en outre l'une et/ou l'autre des caractéristiques suivantes :

   - un système d'acquisition (10), agencé en aval des moyens de liaison (8, 8a-8c), et adapté pour acquérir et enregistrer lesdits signaux ;
   - un calculateur (11) relié à l'au moins une fibre de mesure (7, 7a-7f), adapté pour déterminer des composantes spatiales du champ de contraintes et/ou déformations locales à partir des signaux.

9. Dispositif selon l'une quelconque des revendications précédentes, dans lequel matériau constituant le corps d'épreuve (5) est isotrope.

10. Dispositif selon l'une quelconque des revendications précédentes, dans lequel les propriétés mécaniques du matériau constituant le corps d'épreuve (5) sont identiques à celles du matériau sain constitutif de la structure (1).

11. Dispositif selon l'une quelconque des revendications précédentes, dans lequel les moyens de liaison (8, 8a-8c) sont rassemblés en un seul câble de liaison.

12. Dispositif selon l'une quelconque des revendications précédentes, comprenant une pluralité de corps d'épreuve (5) reliés entre eux.

13. Dispositif selon l'une quelconque des revendications précédentes, présentant en outre l'une des caractéristiques suivantes :

   - la fibre de mesure est un composant séparé du corps d'épreuve, assemblé au corps d'épreuve en étant inséré à travers un canal du corps d'épreuve et fixé audit canal du corps d'épreuve ;
   - la fibre optique de mesure comprend un guide d'onde inscrit dans le corps d'épreuve.

14. Structure mécanique (1) comprenant un volume de mesure (2) et un dispositif de mesure selon l'une quelconque des revendications 1 à 13.

**Patentansprüche**

1. Vorrichtung zur Messung von lokalen Spannungen und/oder Deformationen innerhalb eines Messvolumens (2) einer Struktur (1) aus Materialien, die bekannte mechanische Eigenschaften aufweisen, wobei die Vorrichtung umfasst:

   - einen ellipsoidförmigen Prüfkörper (5), der in das Messvolumen (2) eingeschlossen werden soll und aus homogenem Material mit bekannten mechanischen Eigenschaften besteht,
   - k Deformationsmessfasern (7, 7a-7f), die in k unabhängigen Richtungen angeordnet und im Inneren des Prüfkörpers (5) befestigt sind, so dass Deformationen des Prüfkörpers (5) auf die Messfasern (7, 7a-7f) übertragen werden, wobei k zwischen 2 und 6 liegt,
   - Mittel (8, 8a-8c) zum Verbinden der k Messfasern (7, 7a-7f) mit einem System (9, 10, 11), das dazu ausgebildet ist, Signale von den Messfasern (7, 7a-7f) zu erfassen, die repräsentativ für die Deformationen der Messfasern (7, 7a-7f) sind, und die lokalen Spannungen und/oder Deformationen aus wenigstens den erfassten Signalen und den bekannten mechanischen Eigenschaften der Materialien des Prüfkörpers (5) und der Struktur (1) zu bestimmen, wobei die k Messfasern (7, 7a-7f) dazu angeordnet sind, unabhängige Komponenten des Spannungstensors in dem Prüfkörper (5) zu bestimmen.

2. Vorrichtung nach Anspruch 1, wobei die Messfasern optische Messfasern (7, 7a-7f) sind, wobei die Verbindungsmittel (8, 8a-8c) dazu ausgebildet sind, die Messfasern mit einem System (9) zu verbinden, das dazu ausgebildet ist, die optischen Messfasern (7, 7a-7f) zu stimulieren.

3. Vorrichtung nach Anspruch 2, wobei die Verbindungsmittel Vorrichtungen sind, die optische Fasern (8, 8a-8c) in optischer Verbindung mit den Messfasern (7, 7a-7f) umfassen.

4. Vorrichtung nach Anspruch 3, wobei die Verbindungsmittel (8, 8a-8c) dazu ausgebildet sind, ein Stimulationssignal in Richtung der Messfasern (7, 7a-7f) zu übertragen und von den Messfasern (7, 7a-7f) ein Signal zu übertragen, das aus einer Wechselwirkung zwischen den Messfasern (7, 7a-7f) und dem Stimulationssignal stammt.

5. Vorrichtung nach einem der vorhergehenden Ansprüche, welche eines der folgenden Merkmale aufweist:

   - k ist gleich 3;
   - k ist gleich 6 und die Achsen der Messfasern (7, 7a-7f) sind im Wesentlichen senkrecht zu den Flächen eines regelmäßigen Dodekaeders angeordnet.

6. Vorrichtung nach einem der vorhergehenden Ansprüche, welche ferner ko zusätzliche Deformationsmessfasern umfasst, die nicht unabhängig voneinander in den Messfasern (7, 7a-7f) angeordnet sind, wobei ko zwischen 1 und k liegt.

**7.** Vorrichtung nach einem der vorhergehenden Ansprüche, wobei jede Messfaser (7, 7a-7f) an ihren Enden (7', 7") am Prüfkörper (5) befestigt ist.

**8.** Vorrichtung nach einem der vorhergehenden Ansprüche, welche ferner das eine und/oder das andere der folgenden Merkmale aufweist:

- ein Erfassungssystem (10), welches stromabwärts von den Verbindungsmitteln (8, 8a-8c) angeordnet und dazu ausgebildet ist, die genannten Signale zu erfassen und aufzuzeichnen;
- einen Rechner (11), der mit der wenigstens einen Messfaser (7, 7a-7f) verbunden ist und dazu ausgebildet ist, aus den Signalen räumliche Komponenten des lokalen Spannungs- und/oder Deformationsfeldes zu bestimmen.

**9.** Vorrichtung nach einem der vorhergehenden Ansprüche, wobei das Material, das den Prüfkörper (5) bildet, isotrop ist.

**10.** Vorrichtung nach einem der vorhergehenden Ansprüche, wobei die mechanischen Eigenschaften des Materials, das den Prüfkörper (5) bildet, identisch mit denen des die Struktur (1) bildenden gesunden Materials sind.

**11.** Vorrichtung nach einem der vorhergehenden Ansprüche, wobei die Verbindungsmittel (8, 8a-8c) zu einem einzigen Verbindungskabel zusammengefasst sind.

**12.** Vorrichtung nach einem der vorhergehenden Ansprüche, welche eine Vielzahl von miteinander verbundenen Prüfkörpern (5) umfasst.

**13.** Vorrichtung nach einem der vorhergehenden Ansprüche, welche ferner eines der folgenden Merkmale aufweist:

- Die Messfaser ist ein vom Prüfkörper getrenntes Bauteil, das mit dem Prüfkörper verbunden ist, indem es durch einen Kanal des Prüfkörpers eingeführt und an dem Kanal des Prüfkörpers befestigt wird;
- Die optische Messfaser umfasst einen Wellenleiter, der in den Prüfkörper eingetragen ist.

**14.** Mechanische Struktur (1), die ein Messvolumen (2) und eine Messvorrichtung nach einem der Ansprüche 1 bis 13 umfasst.

**Claims**

**1.** A device for measuring local strains and/or strains inside a measuring volume (2) of a structure (1) of materials having known mechanical properties, the device comprising:

- a test body (5) of ellipsoidal shape intended to be included in the measuring volume (2), and made of homogeneous material with known mechanical properties,
- k deformation measuring fibres (7, 7a-7f) disposed in k independent directions and attached inside said test body (5), such that deformations of the test body (5) are transmitted to the measuring fibres (7, 7a-7f), k being comprised between 2 and 6,
- connecting means (8, 8a-8c) of the k measuring fibres (7, 7a-7f) to a system (9, 10, 11) adapted to detect signals originating from the measuring fibres (7, 7a-7f) representative of the deformations of the measuring fibres (7, 7a-7f) and determine the local strains and/or deformations from at least the detected signals and the known mechanical properties of the materials of the test body (5) and the structure (1), the k measuring fibres (7, 7a-7f) being arranged to determine independent components of the tensor of the strains in the test body (5).

**2.** The device according to claim 1, wherein the measuring fibres are measuring optical fibres (7, 7a-7f), wherein the connecting means (8, 8a-8c) are adapted to connect the measuring fibres to a system (9) adapted to stimulate the measuring optical fibres (7, 7a-7f).

**3.** The device according to claim 2, wherein the connecting means are devices comprising optical fibres (8, 8a-8c) in optical communication with the measuring fibres (7, 7a-7f).

**4.** The device according to claim 3, wherein the connecting means (8, 8a-8c) are adapted to transmit, in the direction of the measuring fibres (7, 7a-7f), a stimulation signal, and to transmit, from the measuring fibres (7, 7a-7f), a signal originating from an interaction between the measuring fibres (7, 7a-7f) and the stimulation signal.

5.  The device according to any one of the preceding claims, having one of the following features:

    - k is equal to 3
    - k is equal to 6 and the axes of the measuring fibres (7, 7a-7f) are placed substantially perpendicular to the faces of a regular dodecahedron.

6.  The device according to any one of the preceding claims, further comprising ko measuring fibres arranged non-independently in the measuring fibres (7, 7a-7f), where ko is comprised between 1 and k.

7.  The device according to any one of the preceding claims, wherein each measuring fibre (7, 7a-7f) is attached, at the ends (7', 7") thereof, to the test body (5).

8.  The device according to any one of the preceding claims, further comprising one and/or other of the following features:

    - an acquisition system (10), arranged downstream of the connecting means (8, 8a-8c), and adapted to acquire and record said signals;
    - a computer (11) connected to the at least one measuring fibre (7, 7a-7f), adapted to determine spatial components of the strain field and/or local deformations from the signals.

9.  The device according to any one of the preceding claims, wherein the material constituting the test body (5) is isotropic.

10. The device according to any one of the preceding claims, wherein the mechanical properties of the material constituting the test body (5) are identical to those of the sound material constituting the structure (1).

11. The device according to any one of the preceding claims, wherein the connecting means (8, 8a-8c) are assembled in a single connecting cable.

12. The device according to any one of the preceding claims, comprising a plurality of test bodies (5) which are connected to each other.

13. The device according to any one of the preceding claims, further having one of the following features:

    - the measuring fibre is a component separate from the test body, assembled to the test body by being inserted through a channel of the test body and fixed to said channel of the test body;
    - the measuring optical fibre comprises a waveguide inscribed in the test body.

14. A mechanical structure (1) comprising a measuring volume (2) and a measuring device according to any one of claims 1 to 13.

**FIG. 1**

**FIG. 2**

**FIG. 3**

**FIG. 4**

**FIG. 5**

**FIG. 6**

**FIG. 7**

**FIG. 8**

**FIG. 9**

FIG. 10

**EP 2 972 072 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2855210
- WO 2006127034 A
- US 6696974 B
- WO 2010034321 A
- US 5629757 A

**Littérature non-brevet citée dans la description**

- **J. D. ESHELBY.** *Proceedings of the Royal Society of London,* 1957, vol. 241, 376-396
- **J. D. ESHELBY.** The Elastic Field Outside an Ellipsoidal Inclusion. *Proceedings of the Royal Society of London, Series A, Mathematical and Physical Sciences,* 27 Octobre 1959, vol. 252 (1271), 561-569
- **J.D. ESHELBY.** Progress in Solid Mechanics. North Holland Publishing Compagny, 1961, vol. II
- **M. BORNERT ; T. BRETHEAU ; P. GILLORMINI.** Homogénéisation en mécanique des matériaux. *Hermes Science, coll. Mécanique et Ingénierie des Matériaux,* 2001
- **J. D. ESHELBY.** The détermination of the elastic field of an ellipsoïdal inclusion and related problems. *Proceedings of the Royal Society of London,* 1957, vol. 241, 376-396